# EUROPEAN PATENT SPECIFICATION

(11) **EP 0 979 933 B1**
(45) Date of publication and mention of the grant of the patent: **01.09.2004**
(21) Application number: 98961628.9
(22) Date of filing: 28.12.1998
(51) Int. Cl.: F02C 9/00, F02C 9/26, F01D 21/00

(54) **REVOLUTION SPEED CONTROL METHOD IN GAS TURBINE SHUTDOWN PROCESS**
DREHZAHLKONTROLLE BEIM ABSCHALTEN EINER GASTURBINE
PROCEDE DE CONTROLE DE VITESSE DE REVOLUTION DANS UN PROCESSUS D'ARRET DE TURBINE A GAZ

(30) Priority: 05.01.1998 JP 18698
(43) Date of publication of application: 16.02.2000
(73) Proprietor: Mitsubishi Heavy Industries, Ltd., Tokyo 100-8315 (JP)
(72) Inventor: SUENAGA, Kiyoshi, Mitsubishi Heavy Ind., Ltd., Takasago-shi, Hyogo-ken 676-0008 (JP); HASHIMOTO, Yukihiro, Mitsubishi Heavy Ind. Ltd., Takasago-shi, Hyogo-ken 676-0008 (JP); TOMITA, Yasuoki, Mitsubishi Heavy Ind., Ltd., Takasago-shi, Hyogo-ken 676-0008 (JP)
(74) Representative: Henkel, Feiler & Hänzel
(86) International application number: PCT/JP1998/005988
(87) International publication number: WO 1999/035384

(56) References cited:
- EP-A- 0 697 507
- JP-A- 8 061 095
- JP-A- 9 032 583
- JP-U- 3 071 142
- US-A- 4 010 605
- US-A- 4 201 923
- PATENT ABSTRACTS OF JAPAN vol. 1997, no. 06, 30 June 1997 (1997-06-30) & JP 09 032583 A (TOSHIBA CORP), 4 February 1997 (1997-02-04)
- PATENT ABSTRACTS OF JAPAN vol. 1997, no. 02, 28 February 1997 (1997-02-28) & JP 08 284615 A (TOSHIBA CORP), 29 October 1996 (1996-10-29)
- PATENT ABSTRACTS OF JAPAN vol. 007, no. 197 (M-239), 27 August 1983 (1983-08-27) & JP 58 096131 A (HITACHI SEISAKUSHO KK), 8 June 1983 (1983-06-08)

## Description

### BACKGROUND OF THE INVENTION

### Field of the Invention

The present invention relates generally to a rotational speed control method in a process for stopping a gas turbine and specifically to an operation method for controlling a rotational speed in the stopping process so as to avoid an excessive stress caused in a moving blade.

### Description of the Prior Art

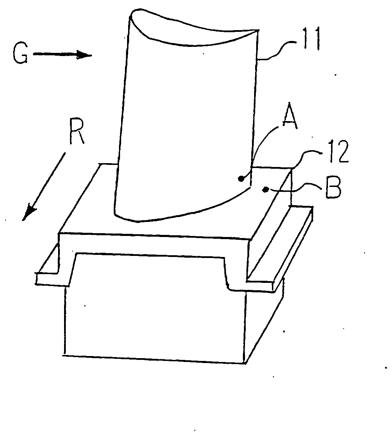

Fig. 3 is a perspective view of a gas turbine moving blade, wherein numeral 11 designates a moving blade, numeral 12 designates a platform thereof and the moving blade 11 is rotated by a high temperature combustion gas G in a direction R. In such a gas turbine moving blade operated in a rated rotational speed, when a load decreases to no load and fuel is shut off for stop of operation, then excessive thermal stress and centrifugal force arise in a stopping process, as described later, and a crack may occur in the blade, as the case may be.

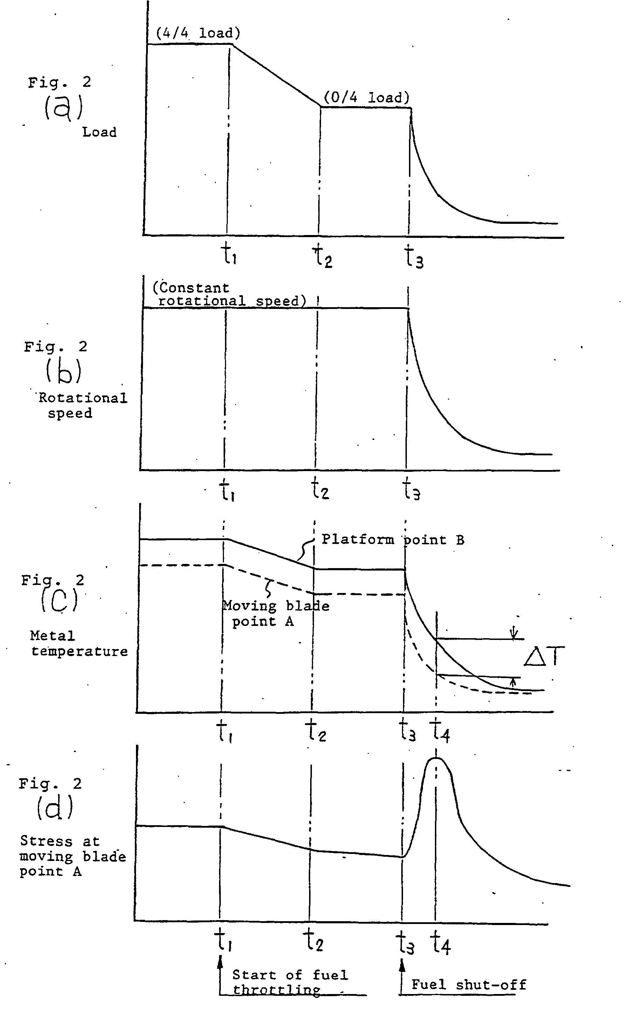

Fig. 2 is an explanatory view of transition of occurrence of stress in the blade in the abovementioned gas turbine stopping process, wherein Fig. 2(a) shows a state of load, Fig. 2(b) shows a state of rotational speed, Fig. 2(c) shows a state of metal temperature and Fig. 2(d) shows a state of stress at point A of the moving blade 11 of Fig. 3. In Fig. 2(a), a gas turbine is operated with 4/4 load (full load) until time t₁ on the time axis, fuel is throttled starting from the time t₁ to time t₂ when the load decreases to 0/4 load (no load), a gas turbine rotor is kept rotated in a state of no load until time t₃ when the fuel is shut off and then the load comes to zero state rapidly.

In Fig. 2(b), corresponding to the load transition of Fig. 2(a), the gas turbine is usually kept operated in a rated rotational speed from the time t₂ when the load becomes 0/4 to the time t₃ when the fuel is shut off, and when the fuel is so shut off at the time t₃, then the rotational speed decreases rapidly to come to a stop.

In Fig. 2(c), the metal temperature is shown with respect to point A of the moving blade 11 and point B of the platform 12, both shown in Fig. 3. As the high temperature combustion gas flows at a constant rate until the time t₁ and likewise the load is the 4/4 load and the rotational speed is the rated one until this time t₁, the metal temperature is kept in a high temperature level, and when the load starts to decrease at the time t₁, then the fuel is throttled starting from the time t₁ and the metal temperature goes down until the time t₂ of the 0/4 load to be then kept constant until the time t₃ while the state of the 0/4 load continues. As a thermal capacity is larger in the platform 12 than in the moving blade 11, the metal temperature is kept higher at the point B than at the point A until the time t₃.

When the fuel is shut off to zero at the time t₃, the metal temperature decreases rapidly both at the points A, B. In this process, while the rotational speed also decreases gradually, at time t₄ when the rotational speed does not enough decrease yet, a differential temperature between the point A and the point B becomes largest and thereafter the temperatures at the respective points decrease gradually to come to a same temperature finally.

Fig. 2(d) shows a state of stress at the point A of the moving blade 11. The stress is constant until the time t₁ and then decreases slightly as the load decreases to the time t₂ when the load becomes the 0/4 load. Thereafter, even in the state of no load from the time t₂ to the time t₃, the stress decreases slightly further and at the time t₄ when the largest differential temperature ΔT occurs as shown in Fig. 2(c), an excessive thermal stress is generated. In addition to this thermal stress, as the rotational speed remains still to some extent, a centrifugal force in proportion to the rotational speed squared acts, hence a large force is added to the point A and a crack may occur, as the case may be, to break the blade.

As mentioned above, in the process that the gas turbine operated with a full load is decreased of the load to be operated with no load, the fuel is then shut off and the rotational speed decreases, while the rotational speed does not enough decrease yet, there occurs a large differential temperature between the moving blade and the platform, thereby a large thermal stress occurs in the moving blade. Further, in addition to this thermal stress, a centrifugal force in proportion to the rotational speed squared acts. Thus, if such process is repeated, the blade may be broken. There had been no countermeasure in the prior art for preventing the large force acting in the moving blade in this process and an appropriate countermeasure has been long desired for a safety purpose as well.

US-A-4 010 605 discloses a method for controlling the rotational speed in a gas turbine for a combined cycle electric power plant. This document mainly deals with the speed control after ignition and during acceleration periods of the gas turbine.

### SUMMARY OF THE INVENTION

In view of the problem in the prior art, it is an object of the present invention to provide a rotational speed control method in a gas turbine stopping process, wherein, in a process that a gas turbine operated in a rated rotational speed is decreased of load to be operated with no load and is then shut off of fuel for stop of operation, a gas turbine rotational speed is controlled to be decreased so that a centrifugal force caused thereby is decreased as well as fuel is throttled so that a differential temperature in a moving blade is made smaller, thereby a total stress caused by the centrifugal force and the differential temperature is decreased and breakage of the moving blade can be prevented.

In order to achieve said object, the present invention provides the rotational speed control method in a gas turbine stopping process as defined in the claim.

In a gas turbine operated in a rated rotationary speed with a full load, when fuel is throttled with a load being decreased gradually to no load and the fuel is shut off in no load operation, then, while the rotational speed is not enough decreased yet in the stopping process, a differential temperature between a moving blade and a platform thereof becomes large, by which an excessive thermal stress occurs. In addition to this thermal stress, a centrifugal force in proportion to the rotational speed squared acts in the moving blade. Thus, a large force is added to the moving blade and breakage of the moving blade may occur, as the case may be.

In the present invention, therefore, in the process that the load is decreased gradually to no load operation, control is done to decrease the gas turbine rotational speed at a predetermined rate from the rated rotational speed starting from the time when a power generation is extinguished, for example, when a power supply from a gas turbine becomes zero, or when a generator ceases a power generation, and further control is done to decrease the rotational speed to approximately 60% of the rated rotational speed at the time when the fuel is shut off completely. Said level of about 60% of the rated rotational speed is decided in consideration of restrictions of a critical rotational speed in terms of shaft or blade vibration and compressor surging. Thus, the rotational speed is decreased to approximately 60% of the rated rotational speed at the time when the fuel is so shut off and thereafter the rotational speed is also lower than that of the prior art case, hence the centrifugal force which is proportional to the rotational speed squared can be decreased greatly as compared with the prior art. Also, as the rotational speed decreases, less fuel is needed and the metal temperature at the time of fuel shut-off can be also decreased as compared with the prior art. As the result of the decreased centrifugal force and the decreased metal temperature, a total stress of that caused by the centrifugal force and that caused by the differential temperature occurring in the moving blade after the fuel shut-off can be mitigated greatly, there occurs no case of breakage of the moving blade and life thereof can be elongated greatly.

### BRIEF DESCRIPTION OF THE DRAWINGS

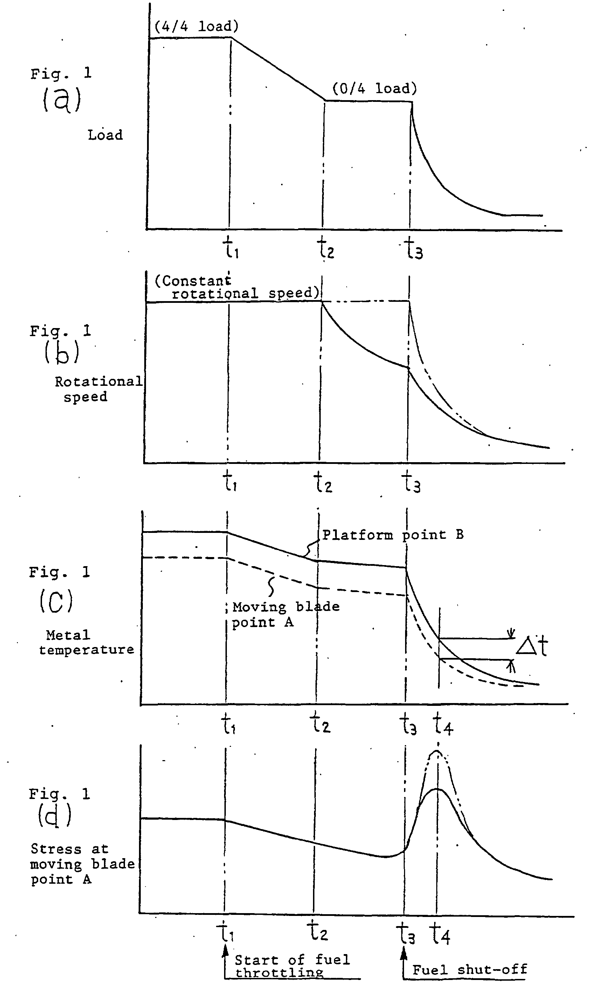

Fig. 1 is an explanatory view of function of a rotational speed control method in a gas turbine stopping process of an embodiment according to the present invention, wherein Fig. 1(a) shows a state of load in the gas turbine stopping process, Fig. 1(b) shows a state of rotational speed, Fig. 1(c) shows a state of metal temperature and Fig. 1(d) shows a state of stress occurring in a moving blade.
Fig. 2 is an explanatory view of transition of occurrence of stress in a moving blade in a gas turbine stopping process in the prior art, wherein Fig. 2(a) shows a state of load, Fig. 2(b) shows a state of rotational speed, Fig. 2(c) shows a state of metal temperature and Fig. 2(d) shows a state of stress occurring in the moving blade.
Fig. 3 is a perspective view of a gas turbine moving blade in the prior art.

### DESCRIPTION OF THE PREFERRED EMBODIMENT

Herebelow, description will be made concretely on an embodiment according to the present invention with reference to Fig. 1. Fig. 1 is an explanatory view of function of a rotational speed control method in a gas turbine stopping process of the embodiment according to the present invention, wherein Fig. 1(a) shows a state of load in the gas turbine stopping process, Fig. 1(b) shows a state of rotational speed, control of which is a feature of the present invention, Fig. 1(c) shows a state of metal temperature of moving blade and platform thereof and Fig. 1(d) shows a state of stress occurring in the moving blade.

The state of load shown in Fig. 1(a) is same as that of the prior art shown in Fig. 2(a). That is, the load is 4/4 load (full load) until time t₁ and then fuel is throttled to time t₂ when the load becomes 0/4 load (no load). The 0/4 load is kept until time t₃ when the fuel is shut off and then the load decreases rapidly to zero state.

In Fig. 1(b), until the time t₂ when the load becomes the 0/4 load, the gas turbine is in a state of load, that is, a generator is in a state of operation, hence the rotational speed is kept constant to a rated rotational speed. From the time t₂ to the time t₃ while a no load operation is done, the rotational speed in the prior art has been kept constant in the rated rotational speed, but in the present invention, the rotational speed is controlled actively from the time t₂ to be decreased to approximately 60% of the rated rotational speed at the time t₃ when the fuel is shut off. At the time t₃ and thereafter, the fuel is shut off and the rotational speed decreases rapidly to come to a stop.

In Fig. 1(c), as the thermal capacity is larger in the platform 12 than in the moving blade 11 as mentioned in the prior art case, the metal temperature is kept slightly higher as a whole at the point B than at the point A. The metal temperature is first kept constant until the time t₁ while the 4/4 load operation is done, and from the time t₁ when the fuel starts to be throttled until the time t₂ when the load becomes the 0/4 load, the metal temperature decreases gradually like in the prior art case.

From the time t₂ to the time t₃, operation of the 0/4 load (no load) is done with less quantity of fuel and the rotational speed is controlled to be decreased gradually to approximately 60% of the rated rotational speed, as mentioned with respect to Fig. 1(b). Thus, only the less quantity of fuel being needed, the metal temperature becomes slightly lower than the prior art case from the time t₂ when the load becomes the 0/4 load to the time t₃ when the fuel is shut off. Because the temperature decrease of this time point leads to a temperature decrease of the next step, it has a large effect.

When the fuel is shut off at the time t₃, the metal temperature decreases rapidly at both points A and B, and at time t₄ on the way of this temperature decrease, a differential temperature Δt between the point A and the point B becomes largest. But as the metal temperature is made slightly lower at the time t₃ than that of the prior art case, the differential temperature Δt at the time t₄, which is after the time t₃, becomes also smaller than that ΔT of the prior art case. After the time t₄, the metal temperature at both points A and B decreases gradually.

In Fig. 1(d), the stress at the point A of the moving blade 11 is same as that of the prior art case until the time t₁ as well as from the time t₁ to the time t₂ when the load becomes the 0/4 load, like in the case of the metal temperature. But from the time t₂, control is done to decrease the rotational speed and the metal temperature is also decreased, hence the influence both of the centrifugal force and the thermal stress is decreased considerably as compared with the prior art case.

In the process that the fuel is shut off at the time t₃ and then both the rotational speed and the metal temperature are decreased, the differential temperature between the point A and the point B becomes largest at the time t₄ so that the stress due to the centrifugal force and the thermal stress at the point A becomes largest at this time point, and thereafter as the rotational speed and the metal temperature go down, the stress also decreases gradually. Because both the rotational speed and the metal temperature are decreased lower than those of the prior art case, the largest stress at the time t₄ can be made considerably smaller than that of the prior art case and there occurs no case of breakage of the moving blade.

In decreasing the rotational speed as mentioned above, control is done so that the rotational speed is decreased to approximately 60% of the rated rotational speed, at which the surging is caused hardly, at the time t₃ when the fuel is shut off. Thus, as the centrifugal force is proportional to the rotational speed squared, influence of the centrifugal force is decreased largely to above 0.36, which equals 60% squared, of that in the prior art case. Further, the metal temperature is also decreased slightly, hence the stress at the point A of the moving blade can be decreased considerably largely.

According to the rotational speed control method in the gas turbine stopping process of the embodiment of the present invention as described above, control is done so as to decrease the rotational speed starting from the time t₂ when the gas turbine comes to an operation of 0/4 load and to decrease it gradually to approximately 60% of the rated rotational speed at the time t₃ when the fuel is shut-off. At the same time, the fuel is also decreased gradually, hence in the process from the time t₃ of the fuel shut-off until the rotational speed is decreased to come to a stop, influence both of the centrifugal force and the thermal stress is decreased, thereby the stress caused at the point A of the moving blade 11 can be decreased generally as largely as by about 40%, breakage of the moving blade does not occur and life thereof can be elongated by the stress mitigation.

It is understood that the invention is not limited to the particular one herein described and illustrated but embraces such modified forms thereof as come within the scope of the appended claim.

### INDUSTRIAL APPLICABILITY

The rotational speed control method in the gas turbine stopping process of the present invention can mitigate the stress due to the centrifugal force as well as the thermal stress both occurring in the moving blade in the gas turbine stopping process, thereby breakage of the moving blade can be prevented, which results in a large elongation of the life thereof.

## Claims

1. A rotational speed control method in a gas turbine stopping process, said stopping process being such that a gas turbine operated in a rated rotational speed with a full load is gradually decreased of load from a time t₁ to a time t₂ from which it is operated with no load and is then shut off of fuel at a time t₃ for stop of operation,
the control method being **characterized in** comprising the step of controlling, starting from the time t₂, a rotational speed of the gas turbine to be decreased at a predetermined rate to approximately 60% of the rated rotational speed at the time t₃, and then decreasing the rotational speed freely.

## Patentansprüche

1. Drehgeschwindigkeits-Steuerverfahren in einem Gasturbinen-Stoppvorgang, wobei der Stoppvorgang derart ist, dass eine mit einer Nominal-Drehgeschwindigkeit bei voller Last betriebene Gasturbine allmählich in der Last heruntergefahren wird von einem Zeitpunkt t₁ bis zu einem Zeitpunkt t₂, von dem an sie ohne Last betrieben wird, und dann zu einem Zeitpunkt t₃ eine Brennstoffzufuhr zum Anhalten des Betriebs abgestellt wird,
wobei das Steuerverfahren **dadurch gekennzeichnet ist, dass** es den Schritt des Steuerns, beginnend von dem Zeitpunkt t₂, einer Drehgeschwindigkeit der Gasturbine, so dass sie mit vorbestimmter Rate bis auf etwa 60% der Nominal-Drehgeschwindigkeit zum Zeitpunkt t₃ abnimmt, und des anschließenden freien Herunterfahrens der Drehgeschwindigkeit umfasst.

## Revendications

1. Procédé de commande de vitesse de rotation dans un procédé d'arrêt d'une turbine à gaz, ledit procédé d'arrêt étant tel que la charge appliquée à une turbine à gaz fonctionnant à une vitesse de rotation nominale en pleine charge est diminuée progressivement d'un instant t₁ à un instant t₂ à partir duquel la turbine à gaz fonctionne sans charge et son alimentation en carburant est ensuite coupée à un instant t₃ pour l'arrêt de son fonctionnement,
le procédé de commande étant **caractérisé en ce qu'**il comprend l'étape consistant à commander, en commençant à l'instant t₂, une vitesse de rotation de la turbine à gaz devant être diminuée à un taux prédéterminé à approximativement 60 % de la vitesse de rotation nominale à l'instant t₃, et à diminuer ensuite librement la vitesse de rotation.
